# EUROPEAN PATENT APPLICATION

(11) **EP 4 449 847 A1**
(43) Date of publication of application: **23.10.2024**
(21) Application number: 23169323.5
(22) Date of filing: 21.04.2023
(51) Int. Cl.: A01D 34/835, A01D 43/08

(54) **FORAGE HARVESTER WITH STALK MULCHER**

(71) Applicant: CNH Industrial Belgium N.V., 8210 Zedelgem (BE)
(72) Inventor: VAN BELLEGHEM, Stijn, 8210 Zedelgem (BE); DEMON, Frederik, 8210 Zedelgem (BE); BLANCKE, Jeffrey, 8210 Zedelgem (BE)
(74) Representative: CNH Industrial IP Department

(57) **Abstract**

The present invention relates to a forage harvester (10) comprises a header (20), a feeder (25), and a cutting drum. The header (20) is attached to the feeder (25) at a front end of the forage harvester (10) and configured to cut a crop (C) from a field and move the cut crop towards the feeder (25). The feeder (25) is configured to take the cut crop from the header (20) and feed it into the cutting drum. The forage harvester (10) further comprises a stalk mulcher (40, 42), which is mounted to a chassis of the forage harvester (10), independent of the header (20).

## Description

### TECHNICAL FIELD

The present invention relates to a forage harvester comprising a header, a feeder, and a cutting drum. The header is attached to the feeder at a front end of the forage harvester and configured to cut a crop from a field and move the cut crop towards the feeder, the feeder being configured to take the cut crop from the header and feed it into the cutting drum.

### BACKGROUND

Such forage harvesters are often used for harvesting maize that is cut into small pieces and used for animal fodder. When harvesting, the header typically cuts off the maize plant at a height of about 10 to 20 cm above ground. Traditionally, the remaining stalks were then worked into the ground later in a separate tillage operation. To save costs and maintain soil quality, it is becoming more and more common for farmers to use less or no tillage and leave the remaining crop stalks in the field.

One known problem that may occur when leaving the maize stalks behind in the field may be infestation by the larvae of stalk borers (*Papaipema nebris*)*.* Stalk borers attack many species of crop and weed plants. In conventional tillage, stalk borer damage is usually confined to field margins. Stalk borers can, however, cause significant damage throughout a field where reduced tillage is practiced. The eggs of the stalk borer may survive the winter in or on the remaining stalks, giving the larvae coming out of those eggs an opportunity to infest new maize plants in the subsequent growing season. The borer caterpillars then damage the maize plant by chewing tunnels through its stalks and leaves, thereby restricting the water and nutrient supply and causing the stems to snap easily. As a result, in significant harvest losses, and diseases such as the common corn smut or fusarium may occur.

To avoid stalk borer infestations, it is known to use a tractor pulling a stalk mulcher for traversing the field and destroying the remaining stalks left behind in the field after completing the harvesting operation. An example of such a stalk mulcher that is drawn behind a tractor is, e.g., described in the European patent application published as EP 3 199 010 A1. Alternatively, as described in the European patent application published as EP 3 272 199 A1, a stalk mulcher may be integrated in the forage harvester header for destroying the plant stalks immediately after the header has cut the plant from the field.

Both those known solution, however, come with some disadvantages. The tractor-pulled stalk mulcher requires a second pass over the same field with a different vehicle, which costs extra time, fuel, and money. The additional pass may further lead to unwanted additional soil compaction. Integrating the stalk mulcher in the forage harvester header may significantly increase the header weight and affect the weight distribution and driveability of the forage harvester.

It is an aim of the present invention to address one or more disadvantages associated with the prior art.

### SUMMARY OF THE INVENTION

According to an aspect of the invention there is provided a forage harvester comprising a header, a feeder, and a cutting drum. The header is attached to the feeder at a front end of the forage harvester and configured to cut a crop from a field and move the cut crop towards the feeder. The feeder is configured to take the cut crop from the header and feed it into the cutting drum. The forage harvester further comprises a stalk mulcher, which is mounted to a chassis of the forage harvester, independent of the header.

By mounting the stalk mulcher independently, separate from the header, the inventors have provided a much more flexible solution than is known from the prior art. The stalk mulcher of the forage harvester according to the invention can either be left at home when not needed, or installed for destroying the remaining stalks in the field without needing a separate tractor to make another pass over the same field. Because it is mounted independent of the header, it can be used with different header types and header models. Because the stalk mulcher is not integrated in the header itself, the combined weight of the header and the stalk mulcher can be better distributed over the length of the forage harvester.

The current invention may especially be useful when the forage harvester is used to harvest maize and the header is a row-independent corn header. The relatively thick stalks of the maize plant are particularly susceptible to stalk borer infestations and destroying the maize plant stalks left behind in the field while harvesting the crop will help to avoid next season's harvest being affected by the stalk borer larvae.

In some embodiments, the forage harvester further comprises one or more front and rear ground engaging members, such as wheels or tracks. The stalk mulcher is mounted to the chassis at a location rearward of the front ground engaging members. For example, the stalk mulcher is mounted immediately behind the front ground engaging members, i.e., in front of the rear ground engaging members. In this position, the stalk mulcher is located close to the centre of gravity of the forage harvester and does not negatively affect the weight balance of the vehicle-implement combination.

In other embodiments, the stalk mulcher is mounted to the chassis at a location rearward of the rear ground engaging members, where it can easily be mounted and unmounted and may serve as a counterbalance for a heavy corn header attached to the front end of the forage harvester. In order to facilitate the easy and stable mounting of the stalk mulcher, the forage harvester may comprise a three point hitch, mounted at a rear end of the chassis, the stalk mulcher being supported by the three point hitch. While three point hitches are commonly used on tractors, which are designed to pull various kinds of agricultural implements, the use of such hitches on forage harvesters has not been considered before. The inventors, however, have realised that the provision of a three point hitch at the rear end of the forage harvester chassis may bring various technical and functional advantages, such as the possibility to quickly and stably mount a stalk mulcher.

In special embodiments, the forage harvester further comprises at least one front stalk mulcher, positioned in front of a respective at least one of the front ground engaging members. A disadvantage of the stalk mulcher being mounted behind some or all of the ground engaging members of the forage harvester is that those ground engaging members may flatten the plant stalks and push them into the soil where it may be difficult for the stalk mulcher to engage and cut them. To ensure that all the stalks are properly destroyed, one or more smaller front stalk mulcher may be installed in front of the front ground engaging members. In this position, the front stalk mulchers are perfectly positioned to destroy the stalks that may otherwise be ran over by the ground engaging members of the forage harvester. Such optional front stalk mulchers may, for example, be mounted to the header or the feeder of the forage harvester or directly to the chassis.

### BRIEF DESCRIPTION OF THE DRAWINGS

Embodiments of the invention will now be described by way of example with reference to the accompanying drawings, in which:
Figure 1 shows a side view of a forage harvester according to a first embodiment of the invention.
Figure 2 shows a side view of a forage harvester according to a second embodiment of the invention.
Figure 3 shows a side view of a forage harvester according to a third embodiment of the invention.

### DETAILED DESCRIPTION

For the purpose of this application, all references to a forward or rearward position and direction are to be interpreted in relation to the intended driving direction of the forage harvester while harvesting.

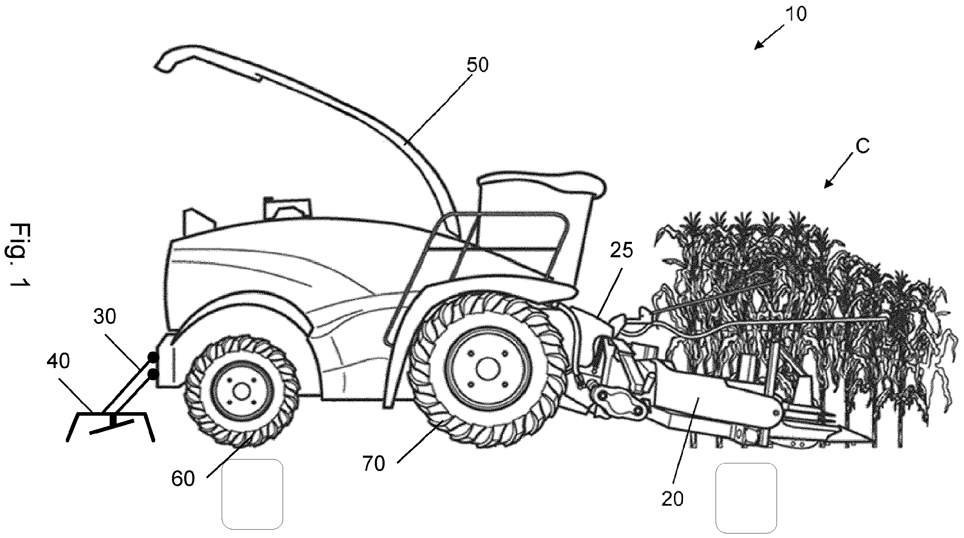

Figure 1 shows a side view of a forage harvester 10 according to an embodiment of the invention. The forage harvester 10 is configured to harvest crops C such as the maize shown here, which may subsequently be cut into small pieces and used in the production of animal feed. To this end, the forage harvester 10 is provided with a header 20 and comprises a crop flow channel, and a spout 50. The header 20 is configured to cut and gather crop C from a field as the forage harvester 10 moves forward. The inlet of the crop flow channel is formed by a feeder 25 which comprises a feed roll housing with feed rolls. The feed rolls are configured to draw the cut and gathered crop into the crop flow channel. In the crop flow channel, the crop is chopped into small pieces by a cutter drum or chopper (not shown) and then blown into and through the spout 50 by a blower (not shown). The spout 50 discharges the crop material out of the forage harvester 10 into a trailer or truck driven adjacent to or behind the forage harvester 10.

The forage harvester 10 of Figure 1 further comprises a stalk mulcher 40, which is mounted to a chassis of the forage harvester 10, independent of the header. In this example, the stalk mulcher 40 is releasably mounted to the forage harvester 10 via a three point hitch 30, but a skilled mechanic will be aware of other ways to, releasably or permanently, mount the stalk mulcher 40 to the forage harvester chassis. Optionally, the stalk mulcher is supported on the ground by one or more ground following wheels or other ground engaging members. Such supporting ground engaging members may help the stalk mulcher to closely follow the contours of the field and ensure that as little stalk material as possible is left behind on the field.

The stalk mulcher 40 typically comprises a series of rotating flail knives or disc knives, configured to cut through the stalks at a height close to the field surface. The stalk mulcher 40 may be powered through a mechanical connection to a regular PTO. Alternatively, the stalk mulcher 40 is powered by one or more hydraulic or electrical motors.

By mounting the stalk mulcher 40 independently, separate from the header 20, the inventors have provided a highly flexible solution. The stalk mulcher 40 can either be left at home when not needed, or installed for destroying the remaining stalks in the field without needing a separate tractor to make another pass over the same field. Because it is mounted independent of the header, it can be used with different header types and header models. Because the stalk mulcher 40 is not integrated in the header 20 itself, the combined weight of the header 20 and the stalk mulcher 40 can be better distributed over the full length of the forage harvester 10.

The current invention may especially be useful when the forage harvester 10 is used to harvest maize C and the header is a row-independent corn header 20. The relatively thick stalks of the maize plant C are particularly susceptible to stalk borer infestations and destroying the maize plant stalks left behind in the field while harvesting the crop will help to avoid next season's harvest being affected by the stalk borer larvae.

The forage harvester 10 of the embodiments shown in the drawings further comprises two front wheels 70 and two rear wheels 60. Alternatively, the forage harvester 10 may use tracks or a combination of wheels and tracks. In the embodiment of Figure 1, the stalk mulcher 40 is mounted to the chassis at a location rearward of the rear ground engaging members 60, where it can easily be mounted and unmounted and may serve as a counterbalance for a heavy corn header 20 attached to the front end of the forage harvester 10. In order to facilitate the easy and stable mounting of the stalk mulcher 40, the forage harvester 10 may comprise a three point hitch 30, mounted at a rear end of the chassis, the stalk mulcher 40 being supported by the three point hitch 30. While three point hitches are commonly used on tractors, which are designed to pull various kinds of agricultural implements, the use of such hitches on forage harvesters has not been considered before. The inventors, however, have realised that the provision of a three point hitch 30 at the rear end of the forage harvester chassis may bring various technical and functional advantages, such as the possibility to quickly and stably mount a stalk mulcher 40.

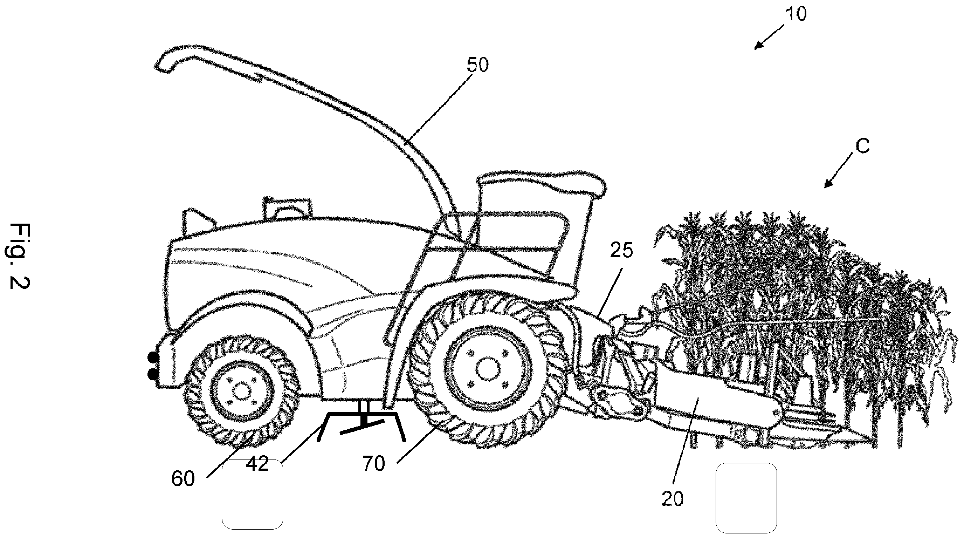

Figure 2 shows a side view of a forage harvester 10 according to a second embodiment of the invention. In this embodiment, the stalk mulcher 42 is mounted to the chassis at a location immediately behind the front wheels 70, i.e., in front of the rear wheels 60. In this position, the stalk mulcher 42 is located close to the centre of gravity of the forage harvester 10 and does not negatively affect the weight balance of the vehicle-implement combination.

Because, in this more central location under the vehicle, it may be difficult to mechanically connect the stalk mulcher 42 to an existing PTO, the stalk mulcher 42 is preferably powered by one or more hydraulic or electrical motors.

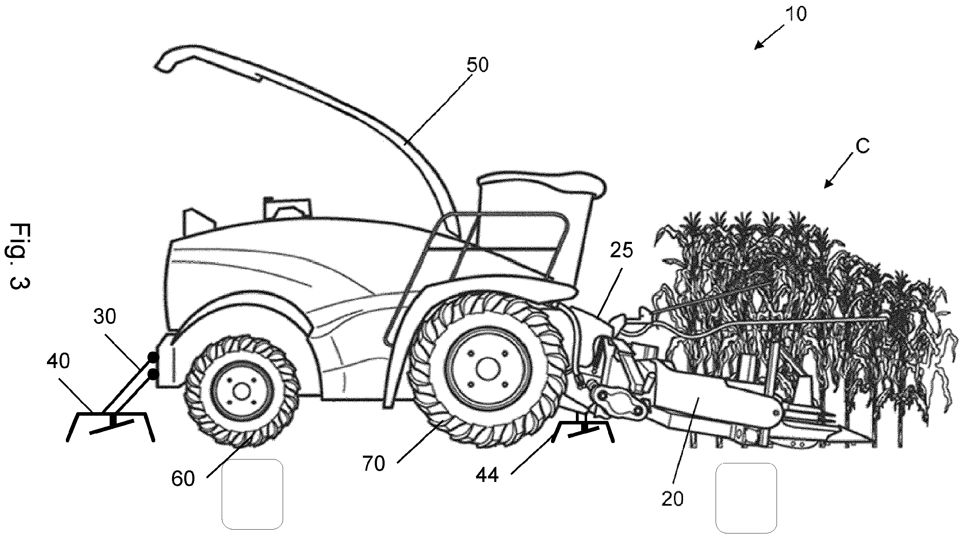

Figure 3 shows a side view of a forage harvester 10 according to a third embodiment of the invention. In this embodiment, which is similar to the forage harvester 10 in Figure 1 in most aspects, the forage harvester 10 further comprises at least one front stalk mulcher 44, positioned in front of one or both of the front wheels 70. A disadvantage of the stalk mulcher 40 being mounted behind some or all of the wheels 60, 70 of the forage harvester 10 is that the wheels 60, 70 may flatten the plant stalks and push them into the soil where it may be difficult for the stalk mulcher 40 to engage and cut them. To ensure that all the stalks are properly destroyed, front stalk mulchers 44 are installed directly in front of the front wheels 70. In this position, the front stalk mulchers 44 are perfectly positioned to destroy the stalks that may otherwise be ran over by the wheels 60, 70 of the forage harvester 10. Such optional front stalk mulchers 44 may, for example, be mounted to the header 20 of the forage harvester 10 or directly to the chassis. In this example, the front stalk mulchers 44 are mounted to the bottom of the housing of the feeder 25.

At this location, at the front of the forage harvester 10, a PTO will typically be available for powering the forage harvester header. The stalk mulcher 44 may, for example, be connected to the same PTO. Alternatively, the stalk mulcher 44 is powered by one or more hydraulic or electrical motors.

It is noted that the embodiments described herein are provided by way of example only. The skilled person will be able to foresee many variations of these embodiments that will also fall within the scope of the appended claims. For example, the forage harvester 10 shown in Figure 2 may additionally be equipped with one or more front stalk mulchers 44 as shown in Figure 3.

## Claims

1. A forage harvester (10) comprising a header (20), a feeder (25), and a cutting drum, the header (20) being attached to the feeder (25) at a front end of the forage harvester (10) and configured to cut a crop from a field and move the cut crop towards the feeder (25), the feeder (25) being configured to take the cut crop from the header (20) and feed it into the cutting drum, the forage harvester (10) further comprising a stalk mulcher (40, 42), the stalk mulcher (40, 42) being mounted to a chassis of the forage harvester, independent of the header (20).

2. A forage harvester (10) according to claim 1, further comprising front ground engaging members (70) and rear ground engaging members (60), and wherein the stalk mulcher (40, 42) is mounted to the chassis at a location rearward of the front ground engaging members (70).

3. A forage harvester (10) according to claim 2, wherein the stalk mulcher (40) is mounted to the chassis at a location rearward of the rear ground engaging members (60).

4. A forage harvester (10) according to claim 3, further comprising a three point hitch (30), mounted at a rear end of the chassis, the stalk mulcher (40) being supported by the three point hitch.

5. A forage harvester (10) according to any of claims 2 to 4, further comprising at least one front stalk mulcher (44), positioned in front of a respective at least one of the front ground engaging members (70).

6. A forage harvester (10) according to claim 5, wherein the at least one front stalk mulcher (44) is mounted to the chassis of the forage harvester (10).

7. A forage harvester (10) according to claim 5, wherein the at least one front stalk mulcher (44) is mounted to the header (20) of the forage harvester (10).

8. A forage harvester (10) according to claim 5, wherein the at least one front stalk mulcher (44) is mounted to the feeder (25) of the forage harvester (10).

9. A forage harvester (10) according to any of the preceding claims, wherein the header (20) is a row-independent corn header (20).
